# EUROPÄISCHE PATENTSCHRIFT

(11) **EP 1 868 885 B1**
(45) Veröffentlichungstag und Bekanntmachung des Hinweises auf die Patenterteilung: **20.08.2008**
(21) Anmeldenummer: 06725009.2
(22) Anmeldetag: 10.03.2006
(51) Int. Cl.: B64C 1/14

(54) **STRUKTURELEMENT EINES FLUGZEUGS MIT EINEM HOHLRAUM UND EINEM DRAINAGEELEMENT**
AIRCRAFT STRUCTURAL ELEMENT PROVIDED WITH A CAVITY AND DRAINAGE ELEMENT
ELEMENT STRUCTUREL D'UN AVION COMPORTANT UNE CAVITE ET UN ELEMENT DE DRAINAGE

(30) Priorität: 10.03.2005 DE 102005011531
(43) Veröffentlichungstag der Anmeldung: 26.12.2007
(73) Patentinhaber: Airbus Deutschland GmbH, 21129 Hamburg (DE)
(72) Erfinder: REDECKER, Robert, 22761 Hamburg (DE)
(74) Vertreter: Habenicht, Wieland
(86) Internationale Anmeldenummer: PCT/EP2006/060620
(87) Internationale Veröffentlichungsnummer: WO 2006/095018

(56) Entgegenhaltungen:
- US-A- 2 302 740
- US-A- 2 655 932
- US-A- 4 463 774
- US-A1- 2003 213 871

## Beschreibung

Die Erfindung betrifft ein Strukturelement eines Flugzeugs mit einem Hohlraum nach dem Oberbegriff von Anspruch 1.

Bei Flugzeugen hat man das Problem, dass aufgrund der großen Temperaturunterschiede am Boden und in der Luft in den Hohlräumen von Strukturelementen des Flugzeugs Feuchtigkeit kondensiert, wenn die Strukturelemente thermischen Kontakt mit der Außenhaut des Flugzeugs haben. Dabei sammelt sich in einigen Hohlräumen besonders viel Feuchtigkeit an. Feuchtigkeit ist aber aus Gründen der Korrosion unerwünscht, außerdem kann kondensierte Feuchtigkeit unkontrolliert ablaufen, beispielsweise in Form von Wassertropfen.

Im Stand der Technik werden zur Drainage von den jeweiligen Hohlräumen geschlossene Drainagesysteme eingesetzt. So werden beispielsweise thermoplastische Drainage-Trichter in einem Wandabschnitt des jeweiligen Hohlraums vernietet, durch die kondensierte Feuchtigkeit abfließen kann. Obgleich es sich bei diesen Trichtern um Standardteile handelt, haben sie doch den Nachteil, dass ein großes Drainage-Loch vorgesehen werden muss, was zu einer hohen mechanischen Belastung der betroffenen Bauteile des Flugzeugs führt. Außerdem ist die Montage mit bis zu sechs Nieten relativ aufwendig.

Alternativ werden Aluminium-Drainage-Rinnen angebracht. Angeschweißte Aluminium-Drainage-Rinnen lassen sich zwar vielfältig einsetzen, sind jedoch keine Standardteile und schwieriger herzustellen und zu montieren. Ferner haben sie ein relativ hohes Gewicht.

Das gleiche gilt für Aluminium-Nippel, die ebenfalls keine Standardteile sind und aufwendig in der Herstellung und Montage sind. Dadurch werden ihre Vorteile in Bezug auf niedriges Gewicht und kleiner Lochdurchmesser aufgewogen. Dies gilt unabhängig davon, ob die Nippel vernietet werden oder eingepresst werden.
Aus US4463774 ist ein strukturelement gemäß dem oberbegriff des Anspruchs 1 bekannt.
Aufgabe der vorliegenden Erfindung ist es, ein Strukturelement eines Flugzeugs mit einem Hohlraum zu schaffen, dessen Herstellung einen geringeren Aufwand an Bauteilen und Montageverrichtungen erfordert und mit dem die genannten Nachteile umgangen werden, die beim Stand der Technik auftreten.

Diese Aufgabe wird gelöst durch das Strukturelement nach Anspruch 1. Bevorzugte Ausführungsformen der Erfindung sind Gegenstand der Unteransprüche.

Der Erfindung liegt die Idee zugrunde, ein Drainageelement in dem Strukturelement mit Hohlraum anzuordnen, das einen Hohlzylinder mit einem Außengewinde und einen Kopf an einem Ende des Hohlzylinders umfasst, wobei der Durchmesser des Außengewindes kleiner als der Durchmesser des Kopfes ist. So kann das Drainageelement in einer Öffnung durch eine Wand des Strukturelements gesteckt werden und über das Außengewinde auf der Gegenseite verschraubt werden. Durch den Hohlzylinder in der Wand des Strukturelements wird eine kommunizierende Verbindung von dem Hohlraum durch die Wand nach außen hergestellt, durch die der Hohlraum entlüftet wird.

Das erfindungsgemäße Strukturelement eines Flugzeugs mit einem Hohlraum und einer Öffnung in einer Wand des Hohlraums, durch die in dem Hohlraum befindliche Feuchtigkeit in die Umgebung austreten kann, wobei in der Öffnung ein Drainageelement zum Abdichten der Öffnung in der Wand des Hohlraums vorgesehen ist, wobei das Drainageelement umfasst: einen Hohlzylinder, der den Hohlraum mit der Umgebung verbindet, mit einem Außengewinde, das einen vorgegebenen Gewindeaußendurchmesser aufweist, und einem Kopf an einem Ende, der einen vorgegebenen Kopfdurchmesser aufweist, wobei der Gewindeaußendurchmesser kleiner als der Kopfdurchmesser ist, sowie ein Klemmverbindungsabschnitt, wie im Anspruch 1 definiert.

Die Erfindung hat damit u.a. den Vorteil, dass das Drainageelement wenig zu dem Gewicht des Strukturelements beiträgt. Es ist kostengünstig und bringt damit die Voraussetzungen für ein Standardteil mit. Die Verschraubung ist eine standardmäßige Befestigungsart. Der Durchmesser der Wandbohrung ist klein, was bedeutet, dass die Wand mechanisch durch den Drainagestutzen nur geringfügig belastet wird. Es sind keine weiteren Löcher oder Bohrungen beispielsweise für Nieten zur Befestigung des Drainageelements notwendig. Das Drainageelement kann gleichermaßen für dicke wie für dünne Wandstärken des Strukturelements eingesetzt werden. Die Installation ist einfach, ein Austausch des Drainageelements ist jederzeit und ohne Schwierigkeiten möglich.

Weitere Vorteile und Merkmale der Erfindung ergeben sich aus der folgenden Beschreibung eines bevorzugten Ausführungsbeispiels, bei der Bezug genommen wird auf die beigefügten Zeichnungen.

Fig. 1 zeigt schematisch einen Wandabschnitt einer Ausführungsform des erfindungsgemäßen Strukturelements teilweise im Querschnitt.

Fig. 2 zeigt schematisch eine Ausführungsform des Drainageelements des erfindungsgemäßen Strukturelements in zerlegtem Zustand im Querschnitt.

Fig. 3 zeigt schematisch eine Ausführungsform des Drainageelements des erfindungsgemäßen Strukturelements in Draufsicht.

Fig. 4 zeigt schematisch eine Ausführungsform des Drainageelements des erfindungsgemäßen Strukturelements in zusammengebauten Zustand im Querschnitt.

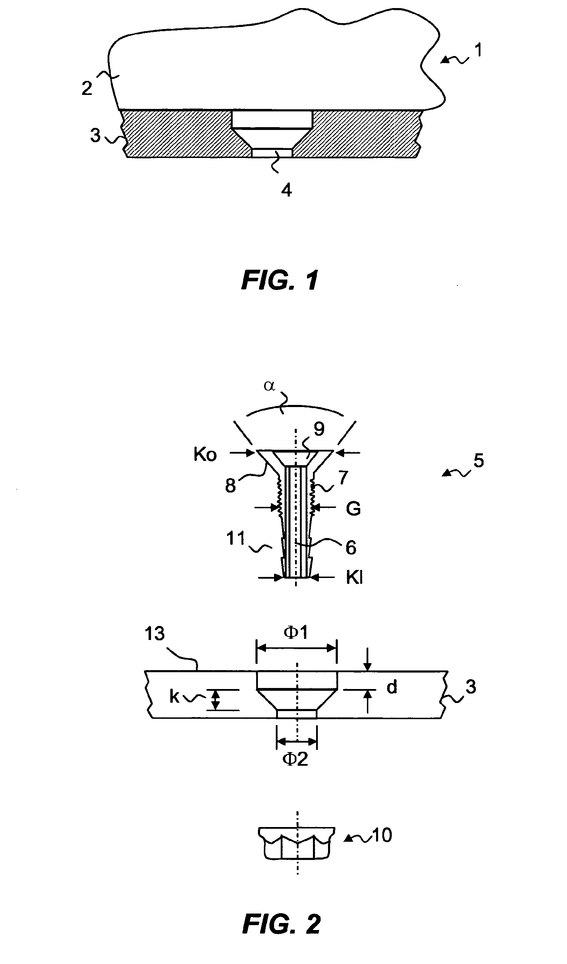

In Fig. 1 ist schematisch ein Schnitt durch ein Strukturelement 1 eines Flugzeugs gezeigt. Dargestellt ist der untere Bereich des Strukturelements 1. Das Strukturelement 1 ist ein Bauteil des Flugzeugrumpfes, des Flugzeuginnenraums, einer Tür oder dergleichen. Dieses Strukturelement 1 weist einen Hohlraum 2 auf, der leer ist oder weitere (nicht dargestellte) Elemente enthält, und der von einer Wand 3 abgeschlossen wird. In diesem Hohlraum kann sich mit Luft von außen eindringende oder aufgrund von Kondenswasserbildung entstehende Feuchtigkeit sammeln, die in die Umgebung transportiert werden muss, um Korrosion oder Schimmelbildung zu vermeiden.

In der Wand 3 des Hohlraums 2 ist dazu eine Öffnung 4 vorgesehen, durch die ein Luftaustausch zwischen dem Hohlraum 2 und der Umgebung stattfindet und Feuchtigkeit aus dem Hohlraum 2 nach außen gelangen kann. Die Öffnung 4 nimmt ein Drainageelement 5 (s. Fig. 2) auf. Durch die Öffnung 4 kann das in dem Hohlraum gesammelte Wasser ablaufen. Um ein optimales Ablaufen des Wassers zu ermöglichen, ist die Öffnung 4 trichterförmig ausgestaltet. Insbesondere weist sie an der Oberfläche der Wand 3 eine Vertiefung auf, so dass die Öffnung 4 in der Wand 3 des Hohlraums 2 ein Senkloch darstellt, dessen Maße im wesentlichen dem eingesetzten Drainageelement 5 entsprechen. Das Drainageelement dient zum Abdichten der Öffnung 4 gegenüber der Wand 3 des Hohlraums, um so zu verhindern, dass Feuchtigkeit in die Innenstruktur der Wand 3 eindringen kann und diese korrodiert.

Das Drainageelement 5, das in die Öffnung 4 in der Wand 3 eingesetzt wird, um die kondensierte Flüssigkeit abzuleiten, ist in Fig. 2 gezeigt. Fig. 2 zeigt eine Ausführungsform des Drainageelements 5, die Wand 3 mit der Öffnung 4 und eine Kontermutter 10 zum Halten des Drainageelements 5 in der Öffnung 4. Das Drainageelement 5 umfasst einen Hohlzylinder 6. Der Hohlzylinder 6 verbindet den Hohlraum des Strukturelements mit der Umgebung, so dass eine kommunizierende Verbindung zwischen dem Hohlraum 2 und der Umgebung entsteht.

An einem Ende des Hohlzylinders 6 ist ein Kopf 8 vorgesehen, mit dem das Drainageelement 5 auf Seiten des Hohlraums 2 befestigt wird. Der Kopf 8 weist einen vorgegebenen Kopfdurchmesser "Ko" auf, der so groß ist, dass der Kopf 8 nicht durch die Öffnung 4 in der Wand 3 des Hohlraums 2 rutschen kann.

Zur Verschraubung des Drainageelements 5 auf derjenigen Seite der Wand 3, die dem Hohlraum 2 gegenüberliegt, weist der Hohlzylinder 6 ein Außengewinde 7 mit einem vorgegebenen Gewindeaußendurchmesser "G" auf. Dieses Außengewinde 7 ist so lang, dass es auf der dem Hohlraum 2 gegenüberliegenden Seite der Wand 3 aus der Öffnung 4 heraustritt und von einer Mutter 10 erfasst werden kann. Daher werden vorzugsweise verschiedene Ausführungsformen des Drainageelements 5 für verschiedene Wandstärken hergestellt.

Das Gewinde 7 weist einen Außendurchmesser "G" auf, der kleiner als der Durchmesser "Ko" des Kopfes 8 ist. Damit wird sichergestellt, dass sich das Drainageelement 5 ohne weiteres durch die Öffnung 4 schieben lässt und nicht an ein Hindernis stößt.

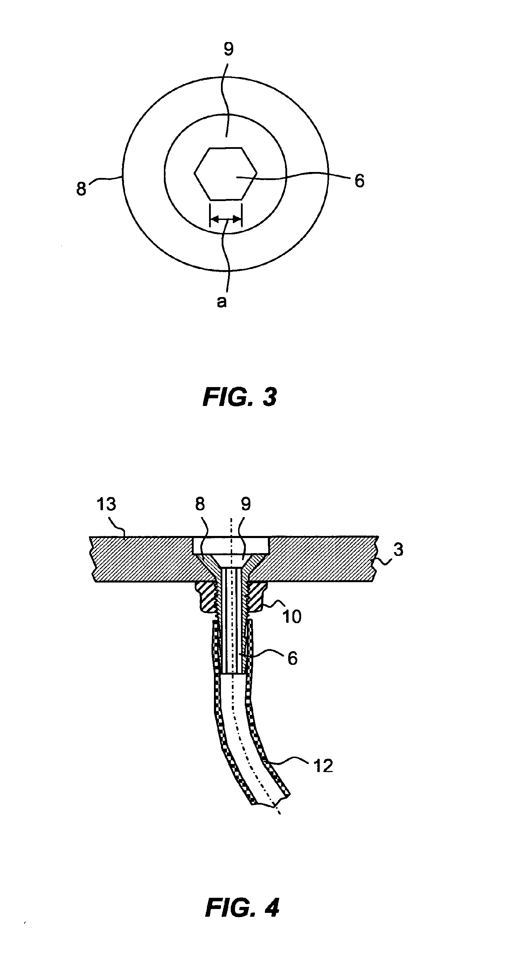

Das Drainageelement 5 wird somit von einer Seite durch die Öffnung 4 in der Wand 3 gesteckt und von der Mutter 10 auf der anderen Seite erfasst und gehalten. Um bei der Montage das Drainageelement 5 beim Verschrauben in der Wand 3 gegen das Drehmoment der Mutter 10 halten zu können, ist der Kopf 8 vorzugsweise mit einem Innenprofil versehen, das in Fig. 3 gezeigt ist, die eine Draufsicht auf den Kopf von oben, d.h. in Richtung zu dem Außengewinde 7 darstellt. In das Innenprofil passt insbesondere ein genormtes Werkzeug, wie z.B. ein Sechskant-Inbusschlüssel. Das Innenprofil hat dann insbesondere eine regelmäßig sechseckige Form mit einer Kantenlänge "a".

Wie in Fig. 3 ersichtlich weist der Kopf einen Eingangstrichter 9 auf, um das ablaufende Kondenswasser in den Hohlzylinder 6 zu leiten, der das oben genannte Innenprofil aufweist. Insbesondere ist der Kopf 8 konisch geformt, wobei das schmale Ende des Kopfes 8 dem Durchmesser "G" des Hohlzylinders 6 mit Außengewinde 7 entspricht und das breite Ende dem Außendurchmesser "Ko" des Kopfes entspricht. Durch die konische Erweiterung des Kopfes wird die Auflagefläche des Kopfes 8 in der Öffnung 4 vergrößert, so dass der Dichtungseffekt vergrößert wird und damit verhindert wird, dass Flüssigkeit neben dem Kopf 8 in die Innenstruktur der Wand 3 eindringt und dort zu Korrosion führt. Darüber hinaus kann zwischen der Öffnung 4 und dem Drainageelement 5 eine (nicht dargestellte) Dichtung vorgesehen werden, die gegen das Eindringen von Feuchtigkeit und dergleichen dient.

Der Öffnungswinkel α des konisch erweiterten Kopfes 8 beträgt insbesondere etwa 100°. Vorzugsweise entspricht die dem Öffnungswinkel α des Trichters der Öffnung 4 in der Wand 3 des Hohlraums 2, so dass der Kopf 8 des Drainageelements 5 auf Seiten des Hohlraumes plan mit der Oberfläche 13 der Wand 3 des Hohlraums 2 abschließt. Dazu sind die Abmessungen der Öffnung 4 in der Wand 3 des Hohlraums 2 und die Abmessungen des Kopfes 8 des Drainageelements 5 bei dem erfindungsgemäßen Strukturelement 1 aufeinander abgestimmt. So weist die Öffnung 4 eine Senktiefe "d" in der Wand 3 auf, die sicherstellt, dass der Kopf 8 vollständig plan mit der Oberfläche 13 der Wand abschließt. D.h. die Kopfhöhe "k" des Kopfes 8 ist so klein, dass der Kopf 8 nicht über die Oberfläche 13 hinaussteht. In der gezeigten Ausführungsform mit konisch zulaufendem Kopf 8 ist die Kopfhöhe "k" der Abstand zwischen dem kopfseitigen Ende des Hohlzylinders 6 und dem freien Ende des Kopfes 8. In der gezeigten Darstellung liegt damit die Oberfläche des Kopfes 8 um "d" unterhalb der Oberfläche 13 der Wand 3.

Der Durchmesser "Φ1" der Öffnung 4 auf Innenseite der Wand 3 ist groß genug, so dass der Kopf vollständig darin aufgenommen werden kann. Der Durchmesser "Φ2" der Öffnung 4 auf der Außenseite der Wand 3 ist so groß, dass der Hohlzylinder 6 des Drainageelements 5 ohne Schwierigkeiten hindurch geschoben werden kann, der Kopf 8 des Drainageelements 5 jedoch nicht hindurchpasst.

Darüber hinaus weist der Hohlzylinder 6 an seinem einen Ende gegenüber dem Kopf 8 einen Klemmverbindungsabschnitt 11 auf. Das Drainageelement 5 in dieser besonders bevorzugten Ausführungsform ist in dem in der Wand 3 eingebauten Zustand in Fig. 4 gezeigt. Der Klemmverbindungsabschnitt 11 dient dazu, einen auf den Abschnitt 11 aufgezogenen Schlauch 12 zu halten, der mit einer (nicht dargestellten) Klemmverbindung an dem Abschnitt 11 befestigt ist. Der Klemmverbindungsabschnitt 11 hat einen vorgegebenen dritten Klemmverbindungsaußendurchmesser "KI", der kleiner als der Gewindeaußendurchmesser "G" des Gewindes 7 ist. Damit wird sichergestellt, dass sich das Drainageelement 5 ohne weiteres durch die Öffnung 4 schieben lässt und nicht an ein Hindernis stößt.

Das Drainageelement 5 ist insbesondere aus einer Aluminiumlegierung gefertigt, aber selbstverständlich sind auch andere Materialien für die Herstellung geeignet, so kann das Drainageelement 5 auch als Spritzgussteil aus Kunststoff gefertigt werden.

### Bezugszeichen

- 1: Strukturelement
- 2: Hohlraum
- 3: Wand
- 4: Öffnung
- 5: Drainageelement
- 6: Hohlzylinder
- 7: Außengewinde
- 8: Kopf
- 9: Eingangstrichter in Kopf
- 10: Mutter
- 11: Klemmverbindungsabschnitt
- 12: Schlauch
- 13: Oberfläche der Wand des Hohlraums
- a: Kantenlänge von Innenprofil
- d: Senktiefe von Öffnung in Wand
- k: Kopfhöhe
- G: Gewindeaußendurchmesser
- Ko: Kopfdurchmesser
- KI: Außendurchmesser von Klemmverbindungsabschnitt
- α: Öffnungswinkel von Kopf
- Φ1: Durchmesser von Öffnung auf Innenseite der Wand
- Φ2: Durchmesser von Öffnung auf Außenseite der Wand

## Patentansprüche

1. Strukturelement eines Flugzeugs mit einem Hohlraum und einer Öffnung (4) in einer Wand (3) des Hohlraums, durch die in dem Hohlraum befindliche Feuchtigkeit in die Umgebung austreten kann, wobei in der Öffnung ein Drainageelement zum Abdichten der Öffnung (4) in der Wand (3) des Hohlraums vorgesehen ist, wobei
das Drainageelement einen Hohlzylinder (6) zur Verbindung des Hohlraums des Strukturelements mit der Umgebung umfasst, der
an seinem ersten Ende einen Kopf (8) mit einem vorgegebenen Kopfdurchmesser (Ko) umfasst, und
ein Außengewinde (7) mit einem vorgegebenen Gewindeaußendurchmesser (G) aufweist, und
wobei
der Gewindeaußendurchmesser (G) kleiner als der Kopfdurchmesser (Ko) ist,
**dadurch gekennzeichnet, dass**
der Hohlzylinder (6) an seinem zweiten Ende einen Klemmverbindungsabschnitt (11) mit einem vorgegebenen Klemmverbindungsaußendurchmesser (KI) umfesst, wobei der Klemmverbindungsaußendurchmesser (KI) kleiner als der Gewindeaußendurchmesser (G) ist

2. Strukturelement nach Anspruch 1,
**dadurch gekennzeichnet,dass**
der Kopf (8) ein Innenprofil aufweist, das insbesondere regelmäßig sechseckig ist.

3. Strukturelement nach Anspruch 1 oder 2,
**dadurch gekennzeichnet, dass** das zweite Ende des Holzylinders sich an seinem freien Ende befindet.

4. Strukturelement nach einem der vorangehenden Ansprüche,
**dadurch gekennzeichnet, dass**
sich der Kopf (8) von dem Hohlzylinder (6) ausgehend konisch erweitert.

5. Strukturelement nach Anspruch 4,
**dadurch gekennzeichnet, dass**
der Öffnungswinkel des konisch erweiterten Kopfes (8) etwa 100° beträgt.

6. Strukturelement nach einem der vorangehenden Ansprüche,
**dadurch gekennzeichnet, dass**
die Öffnung (4) in der Wand (3) des Hohlraums ein Senkloch ist, so dass das Drainageelement (5) auf Seiten des Hohlraumes plan mit der Oberfläche der Wand (3) des Hohlraums abschließt.

7. Strukturelement nach einem der vorangehenden Ansprüche,
**dadurch gekennzeichnet, dass**
das Drainageelement (5) an einem unteren Ende des Strukturelements (1) angeordnet ist.

8. Strukturelement nach einem der vorangehenden Ansprüche,
**dadurch gekennzeichnet, dass**
das Drainageelement (5) aus einer Aluminiumlegierung gefertigt ist.

## Claims

1. An aircraft structural element having a cavity and an opening (4) in a wall (3) of the cavity through which moisture located in the cavity can escape into the surroundings, wherein a drainage element for sealing the opening (4) in the wall (3) of the cavity is provided in the opening,
wherein the drainage element comprises a hollow cylinder (6) connecting the cavity of the structural element to the surroundings and comprising at its first end a head (8) of a predefined head diameter (Ko) and an external thread (7) of a predefined external diameter (G), wherein the external diameter (G) of the thread is smaller than the head diameter (Ko),
**characterized in that**
the hollow cylinder (6) comprises at its second end a clamping connection section (11) having a predefined clamping connection external diameter (Kl), wherein the clamping connection external diameter (Kl) is smaller than the thread external diameter (G).

2. The structural element according to claim 1, **characterised in that** the head (8) has an internal profile which is in particular regularly hexagonal.

3. The structural element according to claim 1 or 2, **characterised in that** the second end of the hollow cylinder is located at its free end.

4. The structural element according to any one of the preceding claims, **characterised in that** the head (8) is conically expanded starting from the hollow cylinder (6).

5. The structural element according to claim 4, **characterised in that** the opening angle of the conically expanded head (8) is about 100°.

6. The structural element according to any one of the preceding claims, **characterised in that** the opening (4) in the wall (3) of the cavity is a countersunk hole so that the drainage element (5) terminates flush with the surface of the wall (3) of the cavity on the sides of the cavity.

7. The structural element according to any one of the preceding claims, **characterised in that** the drainage element (5) is located at a lower end of the structural element (1).

8. The structural element according to any one of the preceding claims, **characterised in that** the drainage element (5) is made of an aluminium alloy.

## Revendications

1. Élément de structure pour avion comportant une cavité et une ouverture (4) dans une paroi (3) de la cavité, ouverture à travers laquelle l'humidité présente dans la cavité peut sortir dans l'environnement, un élément de drainage destiné à rendre étanche l'ouverture (4) dans la paroi (3) de la cavité étant prévu dans l'ouverture, l'élément de drainage comprenant un cylindre creux (6) destiné à faire communiquer la cavité de l'élément de structure avec l'environnement, lequel cylindre creux comprend à sa première extrémité une tête (8) ayant un diamètre de tête (Ko) donné et présente un filetage mâle (7) ayant un diamètre extérieur de filetage (G) donné, et le diamètre extérieur de filetage (G) étant inférieur au diamètre de tête (Ko),
**caractérisé en ce que** le cylindre creux (6) comprend à sa seconde extrémité un segment de liaison par serrage (11) ayant un diamètre extérieur de liaison par serrage (KI) donné, le diamètre extérieur de liaison par serrage (KI) étant inférieur au diamètre extérieur de filetage (G).

2. Élément de structure selon la revendication 1,
**caractérisé en ce que** la tête (8) présente un profil intérieur qui est en particulier un hexagone régulier.

3. Élément de structure selon la revendication 1 ou 2,
**caractérisé en ce que** la seconde extrémité du cylindre creux est située à son extrémité libre.

4. Élément de structure selon l'une des revendications précédentes,
**caractérisé en ce que** la tête (8) s'élargit de manière conique en partant du cylindre creux (6).

5. Élément de structure selon la revendication 4,
**caractérisé en ce que** l'angle d'ouverture de la tête (8) s'élargissant de manière conique est égal à environ 100°.

6. Élément de structure selon l'une des revendications précédentes,
**caractérisé en ce que** l'ouverture (4) dans la paroi (3) de la cavité est un trou conique de sorte que l'élément de drainage (5) se termine du côté de la cavité au niveau de la surface de la paroi (3) de la cavité.

7. Élément de structure selon l'une des revendications précédentes,
**caractérisé en ce que** l'élément de drainage (5) est agencé à une extrémité inférieure de l'élément de structure (1).

8. Elément de structure selon l'une des revendications précédentes,
**caractérisé en ce que** l'élément de drainage (5) est fabriqué dans un alliage d'aluminium.
